# EUROPÄISCHE PATENTSCHRIFT

(11) **EP 2 828 638 B1**
(45) Veröffentlichungstag und Bekanntmachung des Hinweises auf die Patenterteilung: **04.10.2017**
(21) Anmeldenummer: 13712482.2
(22) Anmeldetag: 18.03.2013
(51) Int. Cl.: G01N 15/06, G01N 1/22, B01D 29/60

(54) **PRÜFVORRICHTUNG ZUM ERMITTELN DER PARTIKELBELASTUNG VON UNTER EINEM HOHEN DRUCK STEHENDEM WASSERSTOFF**
TESTING DEVICE FOR DETERMINING THE PARTICULATE LOAD OF HYDROGEN SUBJECT TO HIGH PRESSURE
DISPOSITIF DE VÉRIFICATION POUR LA DÉTERMINATION DE LA CHARGE EN PARTICULES D'HYDROGÈNE SOUS HAUTE PRESSION

(30) Priorität: 20.03.2012 DE 102012005719
(43) Veröffentlichungstag der Anmeldung: 28.01.2015
(73) Patentinhaber: HYDAC Accessories GmbH, 66280 Sulzbach/Saar (DE)
(72) Erfinder: HISS, Helmut, 75228 Ispringen (DE); BOLLINGER, Michael, 72160 Horb (DE)
(74) Vertreter: Bartels, Martin Erich Arthur
(86) Internationale Anmeldenummer: PCT/EP2013/000818
(87) Internationale Veröffentlichungsnummer: WO 2013/139462

(56) Entgegenhaltungen:
- EP-A1- 1 688 731
- WO-A1-2011/028106
- WO-A2-03/083446
- US-A- 3 015 228
- US-A- 3 903 727
- US-A- 4 461 184
- US-A- 5 101 671

## Beschreibung

Die Erfindung betrifft eine Prüfvorrichtung zum Ermitteln der Partikelbelastung von unter einem hohen Druck stehendem Wasserstoff (H₂) mit den Merkmalen im Oberbegriff von Anspruch 1.

In der Veröffentlichung D 7650-10 des amerikanischen Standards ASTM sind eine Prüfvorrichtung dieser Art sowie ein Verfahren der Partikelmessung mit einer solchen Vorrichtung offenbart. Solche Vorrichtungen sind hauptsächlich für eine Anwendung bei Wasserstoff-Betankungssystemen benutzbar, also namentlich bei motorischen Anwendungen, bei denen Wasserstoff als gasförmiger Kraftstoff benutzt wird, oder für die Versorgung von Brennstoffzellen mit Wasserstoff. Bei mit Wasserstoff betriebenen Verbrennungsmotoren, ebenso wie bei Brennstoffzellen, ist es für den störungsfreien Betrieb ausschlaggebend, dass der Wasserstoff von partikulären Fremdstoffen völlig frei ist.

Die EP 1 688 731 A1 und die US 3 015 228 A beschreiben jeweils eine Prüfvorrichtung zum Ermitteln der Partikelbelastung von unter einem hohen Druck stehendem Wasserstoff (H₂) mit einem Gehäuse, das eine Probenkammer enthält, in der eine Filteraufnahme für einen Prüffilter vorgesehen ist, der bei einem Prüfvorgang vor einer Probenmenge Wasserstoff durchströmbar und nach Ende des Prüfvorganges aus der Probenkammer für die Auswertung der Anlagerung von Partikeln herausnehmbar ist.

Eine weitere Prüfvorrichtung geht aus der WO 2011/028106 A1 hervor.

Im Hinblick hierauf stellt sich die Erfindung die Aufgabe, eine Prüfvorrichtung zur Verfügung zu stellen, die für einen Einsatz in Verbindung mit Betankungssystemen besonders geeignet ist und bei hoher Betriebssicherheit eine genaue und zuverlässige Anzeige vorhandener Fremdstoffpartikel liefert.

Erfindungsgemäß ist diese Aufgabe durch eine Prüfvorrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass ein einstellbares Drosselelement vorhanden ist, das eine unterschiedlich starke Drosselung der in die Probenkammer eintretenden Strömung ermöglicht. Beim Einleiten eines Prüfvorganges, wo die zunächst drucklose Probenkammer mit der Quelle für den unter hohem Druck stehenden Wasserstoff in Verbindung gebracht wird, beispielsweise einer Tanksäule für Wasserstoffbetankung, kann mittels des Drosselelementes eine anfängliche Drosselung der Strömung derart eingestellt werden, dass der Prüffilter keinem schädlichen Druckschock ausgesetzt ist. Während so die Gefahr einer Beschädigung des Prüffilters durch einen anfänglichen Druckschock vermieden ist, kann für den weiteren, eigentlichen Prüfvorgang die Drosselwirkung derart verringert werden, dass während eines nun stattfindenden Betankungsvorganges ein Durchfluss durch den Prüffilter mit einer für das Prüfergebnis optimalen Durchflussrate stattfindet, wobei die Durchflussrate beispielsweise im Bereich von 60 g/sec liegen kann, also in einem Bereich, der für einen Betankungsvorgang geeignet ist. Während das einstellbare Drosselelement durch eine ausreichend starke Drosselung die Gefahr der Beschädigung des Prüffilters durch Vermeiden eines Druckstoßes ausschließt, kann während des Betankungsvorganges bei verringerter Drosselwirkung die für den Prüfvorgang geeignete Durchflussrate eingestellt werden, so dass die erfindungsgemäße Vorrichtung bei hoher Betriebssicherheit genaue Prüfergebnisse liefert.

Bei besonders vorteilhaften Ausführungsbeispielen weist die Probenkammer eine Filteraufnahme mit einem Abstützfilter auf, das eine Abstützfläche für den mit seiner Abströmseite daran anliegenden Prüffilter aufweist. Dadurch ergibt sich eine besonders hohe Sicherheit gegen Beschädigung des Prüffilters, selbst wenn es sich um ein feines Filterblatt, beispielsweise in Form eines Papierfilters einer Filterfeinheit von 0,2 *µ*m handelt.

Mit besonderem Vorteil kann ein Abstützfilter in Form einer aus einem metallischen Sinterwerkstoff gebildeten, porösen Platte vorgesehen sein. Hierbei kann es sich vorzugsweise um einen Sinterwerkstoff mit einer Porosität handeln, die einer Filterfeinheit im Bereich von 150 *µ*m entspricht.

Bei besonders vorteilhaften Ausführungsbeispielen ist das Filtergehäuse aus zwei kreiszylindrischen Flanschteilen gebildet, die an Radialebenen bildenden Endflächen miteinander lösbar verbindbar sind, wobei die Probenkammer durch konusförmige Vertiefungen gebildet ist, die in den Endflächen der Flanschteile zur Zylinderachse konzentrisch und aufeinander ausgerichtet ausgebildet sind, und wobei in die Vertiefung des einen Flanschteils ein Zuströmkanal und in die Vertiefung des anderen Flanschteils ein Abströmkanal einmünden.

Mit besonderem Vorteil kann die Anordnung so getroffen sein, dass am Rand der Vertiefung des den Abströmkanal aufweisenden Flanschteils eine vertiefte Ringfläche als Anlagefläche für den Rand der kreisrunden Platte des Abstützfilters gebildet ist. Durch entsprechende Wahl der Tiefe der Vertiefung der Ringfläche kann diese für die Platte des Abstützfilters einen derartigen Sitz bilden, dass die Abstützfläche für den Prüffilter diesen in der Ebene der aneinanderliegenden Radialebenen der Flanschteile des Gehäuses hält.

Bei solcher Position des Prüffilters kann das den Zuströmkanal aufweisende Flanschteil im Bereich des Randes ihrer Vertiefung eine Halterung für den Prüffilter aufweisen, die zwischen dessen Rand und dem Abstützfilter wirksam ist.

In besonders vorteilhafter Weise kann eine solche Halterung durch einen O-Ring gebildet sein, der in einer den Rand der zugeordneten Vertiefung umgebenden Ringnut angeordnet ist.

Bei besonders vorteilhaften Ausführungsbeispielen ist als einstellbares Drosselelement ein Drehschieber vorgesehen, der an einem Anschlussteil des den Zuströmkanal aufweisenden Flanschteils angeordnet und zur Steuerung der Drosselung des Durchlasses des Zuströmkanals auf unterschiedlich große Öffnungsquerschnitte einstellbar ist.

Für einen Prüfvorgang, der bei einem Betankungsvorgang stattfindet, kann die Anordnung mit Vorteil so getroffen sein, dass der Drehschieber auf Öffnungsquerschnitte mit Durchmessern von 1 mm oder 4 mm einstellbar ist, wobei der zunächst auf einen Öffnungsquerschnitt von 1 mm eingestellte Drehschieber mit Beginn des Betankungsvorganges auf 4 mm Öffnungsquerschnitt eingestellt wird.

Nachstehend ist die Erfindung anhand eines in der Zeichnung dargestellten Ausführungsbeispiels im Einzelnen erläutert. Es zeigen:
- Fig. 1: eine schematisch vereinfachte perspektivische Darstellung eines Ausführungsbeispiels der erfindungsgemäßen Prüfvorrichtung in Verbindung mit einem Tankschlauch und einer Zapfpistole für die Betankung eines Kraftfahrzeuges;
- Fig. 2: eine in kleinerem Maßstab und teils aufgebrochen gezeichnete Draufsicht des Ausführungsbeispiels; und
- Fig. 3: einen Längsschnitt des Ausführungsbeispiels.

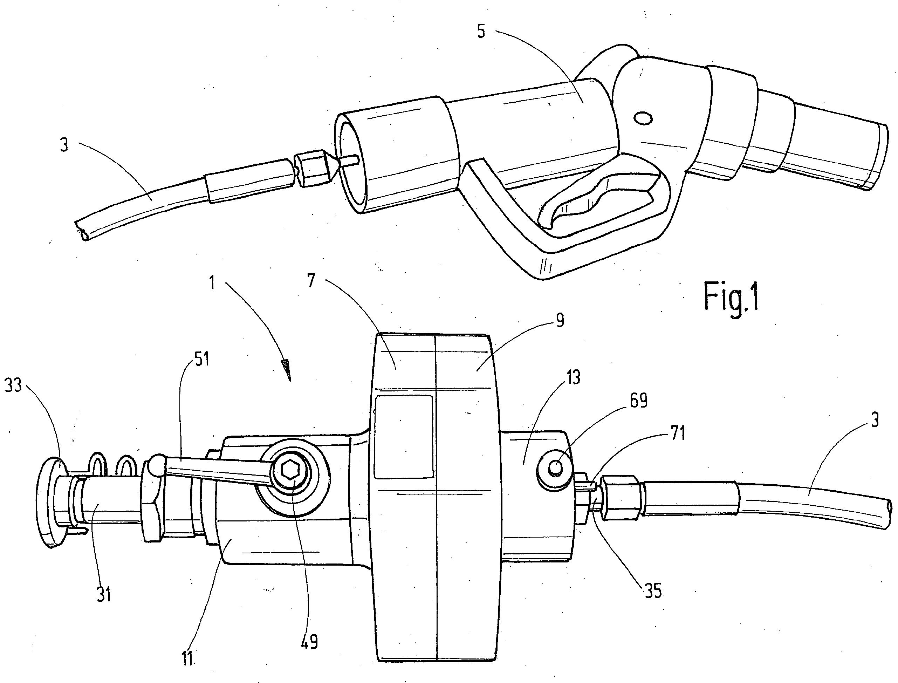

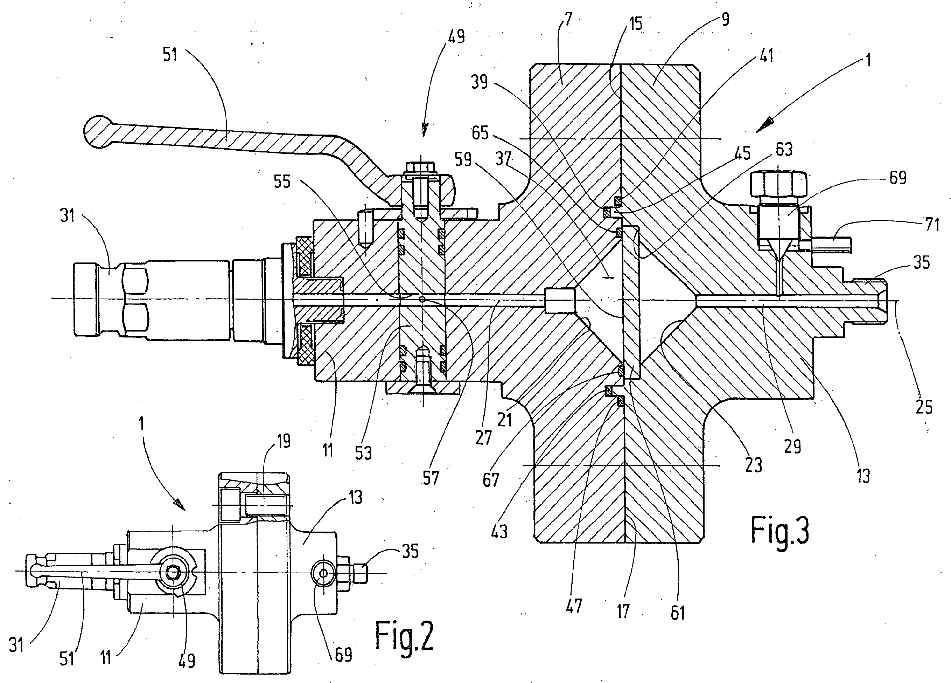

Die Fig. 1 zeigt eine vereinfacht gezeichnete Gesamtdarstellung eines Ausführungsbeispiels der Prüfvorrichtung mit einem Prüfgehäuse 1, das über einen Füllschlauch 3 mit einer üblichen Zapfpistole 5 für die Betankung eines Verbrauchers in Verbindung ist, beispielsweise eines Kraftfahrzeuges mit einer Brennstoffzelle oder einem gasbetriebenen Verbrennungsmotor. Das aus Stahl gefertigte Gehäuse 1 weist, wie am besten aus Fig. 3 zu ersehen ist, zwei kreiszylindrische Flanschteile 7 und 9 auf, an die sich jeweils zentral gelegene, koaxiale Anschlussteile 11 bzw. 13 anschließen. Die Flanschteile 7 und 9 liegen an Endflächen 15 und 17 aneinander, die in einer Radialebene liegen. Für die druckfeste und lösbare Aneinanderlage der Endflächen 15, 17 ist eine Verschraubung vorgesehen, die beim vorliegenden Ausführungsbeispiel durch acht großdimensionierte Schrauben 19 (siehe Fig. 2) gebildet ist. Die Flanschteile 7 und 9 bilden jeweils eine Art Halbschale mit je einer Vertiefung 21 und 23, die sich in Form eines Konus von der zugehörigen Endfläche 15, 17 in Richtung auf das jeweils zugehörige Anschlussteil 11 bzw. 13 hin erstrecken. Die Vertiefungen 21 und 23 sind zueinander konzentrisch und koaxial zur Längsachse 25 des Gehäuses 1.

Zur Längsachse 25 koaxial erstreckt sich durch das Anschlussteil 11 ein Zuströmkanal 27 hindurch und durch das Anschlussteil 13 hindurch ein Abströmkanal 29. Diese Kanäle münden jeweils in die zugeordnete Vertiefung 21 bzw. 23 ein. Der Zuströmkanal 27 endet außerhalb des Anschlussteils 11 in einem Tanknippel 31, der für die Verbindung der Prüfvorrichtung mit einer Quelle für unter hohem Druck stehenden Wasserstoff vorgesehen ist, beispielsweise einer H₂-Tankstelle. Bei der Darstellung von Fig. 1 ist der Tanknippel 31 mit einer aufgesteckten Schutzkappe 33 aus Kunststoff versehen. Am äußeren Ende des Abströmkanals 29 weist das Anschlussteil 13 einen Gewindestutzen 35 für den Anschluss des Tankschlauches 3 auf.

Die halbschalenartigen Flanschteile 7 und 9 begrenzen mit ihren Vertiefungen 21 bzw. 23 eine Probenkammer 37, zu deren Abdichtung entlang der aneinanderliegenden Endflächen 15, 17 ein innerer Dichtring 39 und ein äußerer Dichtring 41 vorgesehen sind. Der innere Dichtring 39 befindet sich am Grund einer Ringnut 43, die in die Endfläche 15 des Flanschteils7 als radiale Vertiefung eingearbeitet ist. Hierzu passend ist an der Endfläche 17 des anderen Flanschteils 9 eine Ringrippe 45 ausgebildet, die in die Ringnut 43 passend eingreift und am Dichtring 39 abdichtet. Der radial weiter außen angeordnete Dichtring 41 sitzt in einer an der Endfläche 15 des Flanschteils 7 am Rand der Ringnut 43 gebildeten, vertieften Stufe 47 und dichtet gegen die Endfläche 17 des Flanschteils 9 ab.

Als einstellbares Drosselelement für eine variable Drosselung der Strömung durch den Zuströmkanal 27 ist am Anschlussteil 11 ein Drehschieber 49 mit einem mittels eines Handhebels 51 drehbaren Schließkörper 53 vorgesehen. Dieser ist bei der in Fig. 3 dargestellten Drehstellung mit einer großen Durchgangsbohrung 55 auf den Zuströmkanal 27 ausgerichtet, so dass die Strömung bei dieser Einstellung praktisch ungedrosselt ist. Eine zweite, mit 57 bezeichnete Durchgangsbohrung bewirkt demgegenüber, wenn sie durch Verdrehen des Schließkörpers 53 auf den Zuströmkanal 27 ausgerichtet ist, eine entsprechend starke Drosselung. Beim vorliegenden Beispiel hat die Durchgangsbohrung 55 einen Durchmesser von 4 mm, während die Durchgangsbohrung 57 einen Durchmesser von 1 mm besitzt.

In der Probenkammer 37 befindet sich eine Halterung für einen Prüffilter 59 in Form einer blattförmigen, kreisrunden Membran. Dabei kann es sich um ein Papierfilter mit einer Filterfeinheit im Bereich von 0,2 *µ*m oder um eine PTFD-Membran mit laminierter Stützstruktur handeln, wie Millipore Fluoropore FGLP 047 mit entsprechender Filterfeinheit, wobei derartige Filter eine Dicke von 0,15 mm aufweisen können. Für ein derartiges blattförmiges Element ist bei der erfindungsgemäßen Vorrichtung als Halterung ein Abstützfilter 61 in Form einer kreisrunden Platte vorgesehen, an deren dem Zuströmkanal 27 zugewandter Seite der Prüffilter 59 mit seiner Abströmseite anliegt. Die Dicke der Platte des Abstützfilters 61 beträgt beim vorliegenden Beispiel 5 mm, und der Abstützfilter 61 ist aus einem Sintermetall mit einer Porosität gebildet, die einer Filterfeinheit im Bereich von 150 *µ*m entspricht. Als Sitz für die Platte des Abstützfilters 61 ist am Rand der Vertiefung 23 im Flanschteil 9 eine vertiefte Ringfläche 63 als Anlagefläche für den Rand der kreisrunden Platte des Abstützfilters 61 ausgebildet. Um eine Halterung für den mit seiner Abströmseite an dem Abstützfilter 61 anliegenden Prüffilter 59 zu bilden, ist neben dem Rand der Vertiefung 61 im Flanschteil 7 eine Ringnut 65 für einen O-Ring 67 gebildet, der durch Anlage am Prüffilter 59 dieses am Abstützfilter 61 sichert. Dieser O-Ring 67 ist beim vorliegenden Beispiel aus PTFE, während die die eigentliche Abdichtung bewirkenden Dichtringe 39 und 41 beim vorliegenden Beispiel aus Polyesterurethan bestehen.

Die erfindungsgemäße Vorrichtung eignet sich in besonderer Weise für die Durchführung des Prüfvorganges während der Betankung eines Verbrauchers, beispielsweise eine Fahrzeuges, wobei der Tanknippel 31 mit einer Quelle für unter hohem Druck stehendem Wasserstoff, insbesondere einer Tankstelle zur Wasserstoffbetankung, und der Gewindestutzen 35 des Gehäuses 1 mit dem zu betankenden Verbraucher zu kuppeln sind.

Zur Vorbereitung des Prüfvorganges ist im Gehäuse 1 befindliche Restluft zu entfernen. An dem den Abströmkanal 29 aufweisenden Anschlussteil 13 des Gehäuses 1 ist hierfür ein Entlüftungsventil 69 mit einem Ausgangsstutzen 71 vorgesehen. Das Entlüftungsventil 69 wird geschlossen, bei auf starke Drosselung eingestelltem Drehschieber 49 wird die Probenkammer 37 befüllt, und nachfolgende werden H₂ und Restluft über das nun wieder geöffnete Entlüftungsventil 69 und den Stutzen 71 nach außen abgegeben. Bei nun druckloser Probenkammer 37 wird über die Zapfpistole 5 die Verbindung zum Tank des Verbrauchers hergestellt und das Entlüftungsventil 69 sodann geschlossen. Nun wird bei noch in der Stellung der starken Drosselung befindlichem Drehschieber 49 der Betankungsvorgang von der Tankstelle her eingeleitet und dabei der Drehschieber 49 rasch auf den ungedrosselten Durchlass umgeschaltet, so dass der Prüfvorgang während eines normalen Tankvorgangs stattfindet. Nach Ende des Tankvorgangs und nachdem das Gehäuse 1 über das Entlüftungsventil 69 wieder drucklos gemacht ist, kann das Gehäuse 1 von den Anschlüssen, d.h. dem Tanknippel 31 und dem Gewindestutzen 35, getrennt und zu einem Untersuchungsort gebracht werden, an dem das Gehäuse 1 durch Trennen der Flanschteile 7 und 9 geöffnet wird, um den Prüffilter 59 zu entnehmen und die Untersuchung auf Anlagerungen durchzuführen. Beim Öffnen des Gehäuses 1 kann der äußere Dichtring 41 den Zwischendruck, der aufgrund des sehr hohen Arbeitsdruckes zwischen innerem und äußerem Dichtring 39 und 41 gebildet ist, schlagartig mit der entlang der Endflächen 15, 17 nach außen gerichteten Strömung abgeben, während ein Strömungsverlauf nach innen in Richtung auf die Probenkammer 37 hin wirksam verhindert ist, weil der innere Dichtring 39 am Grund der Ringnut 43 durch den passenden Eingriff der Ringrippe 45 wirksam gekammert ist, so dass das Dichtsystem radial nach innen effizienter ist und daher der Druckabbau nach außen hin erfolgt.

## Patentansprüche

1. Prüfvorrichtung zum Ermitteln der Partikelbelastung von unter einem hohen Druck stehendem Wasserstoff (H₂), mit einem Gehäuse (1), das eine Probenkammer (37) enthält, in der eine Filteraufnahme für einen Prüffilter (59) vorgesehen ist, der bei einem Prüfvorgang vor einer Probenmenge Wasserstoff durchströmbar und nach Ende des Prüfvorganges aus der Probenkammer (37) für die Auswertung der Anlagerung von Partikeln herausnehmbar ist, **dadurch gekennzeichnet, dass** ein einstellbares Drosselelement (49) vorhanden ist, das eine unterschiedlich starke Drosselung der in die Probenkammer (37) eintretenden Strömung ermöglicht.

2. Prüfvorrichtung nach Anspruch 1, **dadurch gekennzeichnet, dass** die Probenkammer (37) eine Filteraufnahme mit einem Abstützfilter (61) aufweist, das eine Abstützfläche für den mit seiner Abströmseite daran anliegenden Prüffilter (59) aufweist.

3. Prüfvorrichtung nach Anspruch 1 oder 2, **dadurch gekennzeichnet, dass** ein Abstützfilter in Form einer aus einem metallischen Sinterwerkstoff gebildeten, porösen Platte (61) vorgesehen ist.

4. Prüfvorrichtung nach einem der vorstehenden Ansprüche, **dadurch gekennzeichnet, dass** die Porosität der Platte (61) einer im Bereich von 150 *µ*m liegenden Filterfeinheit entspricht.

5. Prüfvorrichtung nach einem der vorstehenden Ansprüche, **dadurch gekennzeichnet, dass** das Filtergehäuse (1) aus zwei kreiszylindrischen Flanschteilen (7 und 9) gebildet ist, die an Radialebenen bildenden Endflächen (15, 17) miteinander lösbar verbindbar sind, dass die Probenkammer (37) durch konusförmige Vertiefungen (21, 23) gebildet ist, die in den Endflächen (15, 17) der Flanschteile (7, 9) zur Zylinderachse (25) konzentrisch und aufeinander ausgerichtet ausgebildet sind, und dass in die Vertiefung (21) des einen Flanschteils (7) ein Zuströmkanal (27) und in die Vertiefung (23) des anderen Flanschteils (9) ein Abströmkanal (29) einmünden.

6. Prüfvorrichtung nach Anspruch 5, **dadurch gekennzeichnet, dass** am Rand der Vertiefung (23) des den Abströmkanal (29) aufweisenden Flanschteils (9) eine vertiefte Ringfläche (63) als Anlagefläche für den Rand der kreisrunden Platte (61) des Abstützfilters gebildet ist.

7. Prüfvorrichtung nach Anspruch 5 oder 6, **dadurch gekennzeichnet, dass** das den Zuströmkanal (27) aufweisende Flanschteil (7) im Bereich des Randes seiner Vertiefung (21) eine Halterung (67) für den Prüffilter (59) aufweist, die zwischen dessen Rand und dem Abstützfilter (61) wirksam ist.

8. Prüfvorrichtung nach Anspruch 7, **dadurch gekennzeichnet, dass** die Halterung durch einen O-Ring (67) gebildet ist, der in einer den Rand der zugeordneten Vertiefung (21) umgebenden Ringnut (65) angeordnet ist.

9. Prüfvorrichtung nach einem der Ansprüche 5 bis 8, **dadurch gekennzeichnet, dass** als einstellbares Drosselelement ein Drehschieber (49) vorgesehen ist, der an einem Anschlussteil (11) des den Zuströmkanal (27) aufweisenden Flanschteils (7) angeordnet und zur Steuerung der Drosselung des Durchlasses des Zuströmkanals (27) auf unterschiedlich große Öffnungsquerschnitte einstellbar ist.

10. Prüfvorrichtung nach Anspruch 9, **dadurch gekennzeichnet, dass** der Drehschieber (49) auf Öffnungsquerschnitte mit Durchmessern von 1 mm oder 4 mm einstellbar ist.

11. Prüfvorrichtung nach einem Ansprüche 5 bis 10, **dadurch gekennzeichnet, dass** an dem Anschlussteil (13) des den Abströmkanal (29) aufweisenden Flanschteils (9) ein mit dem Abströmkanal (29) in Verbindung stehendes Entlüftungsventil (69) vorgesehen ist.

12. Prüfvorrichtung nach einem der Ansprüche 5 bis 11, **dadurch gekennzeichnet, dass** die Endfläche (15) eines Flanschteils (7) in radialem Abstand von der Vertiefung (21) eine axial vertiefte Ringnut (65) und die Endfläche (17) des anderen Flanschteils (9) eine axial vorspringende, in die Ringnut (65) eingreifende Ringrippe (45) aufweisen und dass am Grund der Ringnut (65) ein mit dem Ende der Ringrippe (45) abdichtend zusammenwirkender Dichtring (39) vorgesehen ist.

## Claims

1. A testing device for determining the particulate load of hydrogen (H₂) subject to high pressure, comprising a housing (1) that contains a sample chamber (37) in which a filter holder for a testing filter (59) is provided through which hydrogen can flow prior to a sample quantity during a testing operation, and after the end of the testing operation can be removed from the sample chamber (37) in order to evaluate particulate accumulation, **characterised in that** an adjustable throttle element (49) is present which enables the flow entering the sample chamber (37) to be throttled to different degrees.

2. The testing device according to Claim 1, **characterised in that** the sample chamber (37) has a filter holder with a support filter (61) which has a support surface for the testing filter (59) that lies against it with its outflow side.

3. The testing device according to Claim 1 or 2, **characterised in that** a support filter in the form of a porous plate (61) formed from a metallic sintered material is provided.

4. The testing device according to any of the preceding claims, **characterised in that** the porosity of the plate (61) corresponds to a filter fineness in the range of 150 *µ*m.

5. The testing device according to any of the preceding claims, **characterised in that** the filter housing (1) is formed from two circular cylindrical flange parts (7 and 9) which can be connected to one another detachably on end surfaces (15, 17) that form radial planes, that the sample chamber (37) is formed by conical indentations (21, 23) which in the end surfaces (15, 17) of the flange parts (7, 9) are made to be concentric to the cylinder axis (25) and aligned to one another, and that an inflow channel (27) discharges into the indentation (21) of the one flange part (7), and an outflow channel (29) discharges into the indentation (23) of the other flange part (9).

6. The testing device according to Claim 5, **characterised in that** at the edge of the indentation (23) of the flange part (9) that has the outflow channel (29) a recessed annular surface (63) is formed as a bearing surface for the edge of the circular plate (61) of the support filter.

7. The testing device according to Claim 5 or 6, **characterised in that** the flange part (7) that has the inflow channel (27) can have a holder (67) for the testing filter (59) in the region of the edge of its indentation (21), which holder is effective between the edge of the testing filter and the support filter (61).

8. The testing device according to Claim 7, **characterised in that** the holder is formed by an O ring (67) which is disposed in an annular groove (65) surrounding the edge of the assigned indentation (21).

9. The testing device according to any of Claims 5 to 8, **characterised in that** there is provided as an adjustable throttle element a rotary valve (49) which is disposed on a connecting part (11) of the flange part (7) that has the inflow channel (27) and that can be adjusted to control the throttling of the passage of the inflow channel (27) to differently sized opening cross-sections.

10. The testing device according to Claim 9, **characterised in that** the rotary valve (49) can be set to opening cross-sections with diameters of 1 mm or 4 mm.

11. The testing device according to any of Claims 5 to 10, **characterised in that** a vent valve (69) connected to the outflow channel (29) is provided on the connecting part (13) of the flange part (9) that has the outflow channel (29).

12. The testing device according to any of Claims 5 to 11, **characterised in that** the end surface (15) of a flange part (7) spaced apart radially from the indentation (21) has an axially recessed annular groove (65) and the end surface (17) of the other flange part (9) has an axially projecting annular rib (45) that engages in the annular groove (65), and that a sealing ring (39) interacting with the end of the annular rib (45) such as to form a seal is provided on the bottom of the annular groove (65).

## Revendications

1. Dispositif de contrôle pour déterminer la charge en particules d'hydrogène (H₂) sous haute pression, comprenant un boîtier (1), qui contient une chambre (37) à échantillons, dans laquelle est prévu un logement pour un filtre (59) de contrôle, qui, dans une opération de contrôle, peut être traversé, avant une quantité d'échantillon, par de l'hydrogène et, à la fin de l'opération de contrôle, peut être retiré de la chambre (37) à échantillons pour l'exploitation du dépôt de particules, **caractérisé en ce qu'**il y a un élément (49) d'étranglement réglable, qui rend possible un fort étranglement différent du courant entrant dans la chambre (37) à échantillons.

2. Dispositif de contrôle suivant la revendication 1, **caractérisé en ce que** la chambre (37) à échantillons a un logement de filtre, comprenant un filtre (61) d'appui, qui a une surface d'appui du filtre (59) de contrôle s'y appliquant par son côté de sortie.

3. Dispositif de contrôle suivant la revendication 1 ou 2, **caractérisé en ce qu'**il est prévu un filtre d'appui sous la forme d'une plaque (61) poreuse en un matériau métallique fritté.

4. Dispositif de contrôle suivant l'une des revendications précédentes, **caractérisé en ce que** la porosité de la plaque (61) correspond à une finesse de filtre de l'ordre de 150 µm.

5. Dispositif de contrôle suivant l'une des revendications précédentes, **caractérisé en ce que** le boîtier (1) de filtre est formé de deux parties (7 et 9) de bride cylindriques de section circulaire, qui peuvent être reliées entre elles de manière amovible à des surfaces (15, 17) d'extrémité formant des plans radiaux, **en ce que** la chambre (37) à échantillons est formée de cavités (21, 23) de forme conique, qui sont constituées dans les surfaces (15, 17) d'extrémité des parties (7, 9) de bride en étant dirigées concentriquement à l'axe (25) du cylindre et l'une sur l'autre et **en ce que**, dans la cavité (21) de l'une des parties (7) de bride, débouche un conduit (27) d'afflux et, dans la cavité (23) de l'autre partie (9) de bride, un conduit (29) d'évacuation.

6. Dispositif de contrôle suivant la revendication 5, **caractérisé en ce que**, au bord de la cavité (23) de la partie (9) de bride ayant le conduit (29) d'évacuation, est formée une surface (63) annulaire en creux comme surface d'application du bord de la plaque (61) circulaire du filtre d'appui.

7. Dispositif de contrôle suivant la revendication 5 ou 6, **caractérisé en ce que** la partie (7) de bride ayant le conduit (27) d'afflux a, dans la région du bord de sa cavité (21), une fixation (67) du filtre (59) de contrôle, fixation qui est efficace entre le bord du filtre (59) et le filtre (61) d'appui.

8. Dispositif de contrôle suivant la revendication 7, **caractérisé en ce que** la fixation est formée par un joint (67) torique, qui est disposé dans une rainure (65) annulaire entourant le bord de la cavité (21) associée.

9. Dispositif de contrôle suivant l'une des revendications 5 à 8, **caractérisé en ce qu'**il est prévu, comme élément d'étranglement réglable, une vanne (49) rotative, qui est montée dans une partie (11) de raccord de la partie (7) de bride ayant le conduit (27) d'afflux et qui est réglable pour commander l'étranglement du passage du conduit (27) d'afflux à des sections d'ouverture de grandeurs différentes.

10. Dispositif de contrôle suivant la revendication 9, **caractérisé en ce que** la vanne (49) rotative est réglable à des sections transversales d'ouverture de diamètre de 1 mm ou de 4 mm.

11. Dispositif de contrôle suivant l'une des revendications 5 à 10, **caractérisé en ce qu'**il est prévu, sur la partie (13) de raccord de la partie (9) de bride ayant le conduit (29) d'évacuation, une soupape (69) de purge en communication avec le conduit (29) d'évacuation.

12. Dispositif de contrôle suivant l'une des revendications 5 à 11, **caractérisé en ce que** la surface (15) d'extrémité d'une partie (7) de bride a, à une distance radiale de la cavité (21), une rainure (65) annulaire en retrait axialement et la surface (17) d'extrémité de l'autre partie (9) de bride une nervure (45) annulaire en saillie axialement et pénétrant dans la rainure (65) annulaire et **en ce que**, au fond de la rainure (65) annulaire, est prévu un joint (39) d'étanchéité coopérant avec étanchéité avec l'extrémité de la nervure (45) annulaire.
